# EUROPÄISCHE PATENTSCHRIFT

(11) **EP 4 326 974 B1**
(45) Veröffentlichungstag und Bekanntmachung des Hinweises auf die Patenterteilung: **12.02.2025**
(21) Anmeldenummer: 22720327.0
(22) Anmeldetag: 31.03.2022
(51) Int. Cl.: F01N 13/18, F01N 13/00, H01B 17/00, H01B 17/30

(54) **DURCHFÜHRUNG DURCH EIN GEHÄUSEBAUTEIL, INSBESONDERE FÜR RAUE, MECHANISCH UND THERMISCH BELASTETE UMGEBUNGEN**
FEEDTHROUGH THROUGH HOUSING COMPONENT, ESPECIALLY FOR ROUGH, MECHANICALLY AND THERMALLY LOADED ENVIRONMENTS
PASSAGE À TRAVERS UNE ENVELOPPE, PARTICULIÈREMENT POUR DES ENVIRONNEMENTS RUDES, MECANIQUEMENT ET THERMIQUEMENT CHARGÉS

(30) Priorität: 21.04.2021 DE 102021110048
(43) Veröffentlichungstag der Anmeldung: 28.02.2024
(73) Patentinhaber: SCHOTT AG, 55122 Mainz (DE)
(72) Erfinder: HARTL, Helmut, 3400 Klosterneuburg (AT); ECKER, Reinhard, 84032 Landshut (DE); MIX, Christian, 84036 Landshut (DE)
(74) Vertreter: Schott Corporate IP
(86) Internationale Anmeldenummer: PCT/EP2022/058551
(87) Internationale Veröffentlichungsnummer: WO 2022/223258

(56) Entgegenhaltungen:
- EP-B1- 0 830 695
- EP-B1- 0 942 158
- WO-A2-2018/114392
- DE-A1- 19 533 088
- DE-A1- 3 418 156
- US-B1- 6 628 024

## Beschreibung

Die Erfindung betrifft eine Durchführung durch ein Gehäusebauteil, insbesondere für raue, mechanisch und thermisch belastete Umgebungen.

Befinden sich derartige Durchführungen, beispielsweise zur Durchführung elektrischer oder elektronischer Signale in Abschnitten von Abgasanlagen von Brennkraftmaschinen, beispielsweise bei Kraftfahrzeugen mit einer geregelten Abgasreinigung, so kommt es häufig zu sich stark ändernden Umgebungsbedingungen.

In DE 10 2011 101 676 B4 wird beispielsweise ein Katalysatorerwärmungssystem für eine Brennkraftmaschine eines Kraftfahrzeugs beschrieben, welches ein Überwachungsmodul, ein Modusauswahlmodul und ein Steuermodul für einen elektrisch beheizbaren Katalysator (EHC) aufweist, wobei das Modusauswahlmodul derart konfiguriert ist, dass es auf Grundlage einer ersten Temperatur und/oder des aktiven Katalysatorvolumens einen EHC-Erwärmungsmodus wählt und ein Modussignal erzeugt, auf dessen Grundlage das EHC-Steuermodul einen Strom zu einem elektrisch beheizbaren Katalysator (EHC) der Katalysatoranordnung führt, welcher dessen Erwärmung bewirkt.

Bei derartigen Systemen können hohe Stromstärken zum Einsatz kommen, welche beispielsweise bei 20 A bis 100 A liegen, um insbesondere hohe Heizleistungen zur Verfügung zu stellen, welche in typischer Weise in einem Bereich von 1 kW bis etwa 8 kW liegen. Die hohen Heizleistungen sollen einer zügigen Erwärmung des elektrisch beheizbaren Katalysators (EHC) dienen, um eine Kaltstart- oder Kaltlaufphase möglichst kurz zu halten.

Diese Ströme werden mittels elektrischer Durchführungen in das Innere des Katalysators geleitet, wobei diese Durchführungen in der Regel einen Innenleiter aufweisen, der mittels eines elektrisch isolierenden Materials innerhalb eines diesem zugeordneten Außenleiters gehalten ist, der wiederum am dem Gehäuse des jeweiligen Katalysators in elektrisch leitfähiger Verbindung zu dessen Gehäuse angebracht ist.

Das Dokument DE 10 2008 045 816 A1 schlägt für eine Durchführung ein einen Leiter umgebendes, elastomeres Material vor, um eine Kriechstrecke, welches im Rahmen dieser Offenbarung diejenige Strecke ist, entlang welcher sich Kriechströme zwischen den Fügepartner ausbilden können, zu verlängern. Nachteilig ist bei dieser Lösung, dass elastomere Materialien häufig nicht über die für den Heißbereich von Abgasanlangen nötige thermische Stabilität sowie Dauerbetriebsfestigkeit verfügen, denn im Inneren dieser Katalysatoren können Temperaturen auftreten, welche bis zu mehr als 900° C betragen und somit gegenüber dem Äußeren des Katalysators einen sehr hohen Temperaturgradienten ausbilden.

Bei Durchführungen an Abgaskatalysatoren oder auch an Turboladern von Brennkraftmaschinen treten durchaus Temperaturgradienten zwischen dem Außenleiter und dem Innenleiter der Durchführung auf, welche jeweils mehrere 100 K betragen können.

Hinzu kommt, dass abgasführende Systeme einer starken Temperaturwechselbelastung ausgesetzt sind, beispielsweise beim Übergang von der Kaltstart- oder Kaltlaufphase in einen erwünschten Dauerbetriebszustand oder auch beim Abstellen der jeweiligen Brennkraftmaschine, welches zur Entstehung von thermisch induzierten Spannungen, insbesondere bei inhomogener Abkühlung des jeweiligen Abgaselements führt.

In EP 3 650 415 A1 der gleichen Anmelderin wird eine Fügeverbindung mit einem kristallisierten Glas, welches einen Innenleiter relativ zu einem Außenleiter hält, beschrieben, die als elektrische Stromdurchführung in einem Element eines Abgasstrangs verwendbar ist. Es werden jedoch keine Angaben zur Montage oder mechanischen Halterung dieser Fügeverbindung offenbart.

Die vorstehend diskutierten Durchführungen sind darüber hinaus auch in weiterer Hinsicht rauer Umgebung ausgesetzt, denn im Inneren eines Katalysators, insbesondere eines elektrisch beheizten Katalysators, wirken korrosive Abgase auf die Durchführung ein und in äußeren Bereichen des Katalysators werden häufig Salzwasser oder auch mechanisch aggressive Partikel mit dieser in Kontakt treten.

Vielfach treten auch hohe mechanische Belastung durch Vibrationen auf, welche Beschleunigungen von bis zu deutlich mehr als 10 g entsprechen können. Die dabei entstehenden Kräfte können durch die Befestigung der Durchführung am Katalysator in den Außenleiter eingeleitet werden, welcher den Pin des Innenleiters, der häufig zu im Inneren des Katalysators angeordneten Heizelementen führt, hält, und der im Abgasstrom durch diese Heizelemente somit nochmals weiteren, zusätzlichen mechanischen Belastungen ausgesetzt ist. Beispielsweise können auch durch den pulsierenden Abgasstrom selbst Frequenzenzspektren erzeugt werden, welche bei einer elastischen, insbesondere schwingungsfähigen Befestigung der Durchführung unerwünschte Bewegungen in diese einleiten können.

In WO 2018/114392 A2 der gleichen Anmelderin wird eine Durchführung für ein Batterie- oder ein Kondensatorgehäuse, bevorzugt für ein Superkondensatorgehäuse, mit einem Grundkörper vorgeschlagen, bei welcher der Grundkörper mit wenigstens einer Öffnung versehen ist, die wenigstens ein Funktionselement in einem Glas- oder Glaskeramikmaterial hält, und für eine Verbindung mit einem Gehäuse aus einem Leichtmetall, insbesondere Aluminium, vorgesehen ist, wobei der Grundkörper zumindest teilweise aus einem Leichtmetall, bevorzugt einer Leichtmetalllegierung, besteht. Batterien, Kondensatoren, insbesondere auch Superkondensatoren begegnen jedoch in der Regel nicht den vorstehend beschrieben rauen Umgebungsbedingungen, sondern müssen sogar regelmäßig bereits wegen der in diesen verwendeten chemischen Substanzen stark erhöhte Temperaturen meiden. Soweit in der Antriebstechnik von Kraftfahrzeugen Akkumulatoren verwendet werden, gilt deren Temperaturmanagement erhöhte Aufmerksamkeit, insbesondere auch um sicherzustellen, dass keine brand- oder explosionsgefährdenden Betriebszustände erreicht werden, welche dann Gefahr für Leib und Leben der Fahrzeuginsassen mit sich bringen können.

Aber auch ohne die vorstehend erwähnten Belastungen beim Betrieb einer Brennkraftmaschine besteht bereits die Gefahr einer Vorschädigung der Durchführung, beispielsweise bei deren Montage an einem Gehäusebauteil eines Katalysators. Wird beispielsweise der Außenleiter der Durchführung mit dem Gehäusebauteil des Katalysators verschweißt, kann hierbei durch lokal hohe auftretende Temperaturen und daraus resultierende Spannungen das temperaturstabile, vorzugsweise mineralische Material, welches den Innenleiter hält, geschädigt werden, auch ohne dass diese Schädigung sofort erkennbar sein muss. Derartige Vorschädigungen können jedoch die Dauerbetriebsfestigkeit der vorliegend diskutierten Durchführungen durchaus erheblich vermindern.

Weitere Durchführungen sind aus den folgenden Publikationen bekannt: EP 0 830 695 B1, DE 195 33 088 A1, US 6 628 024 B1), EP 0 942 158 B1, WO 2018/114392 A2 oder DE 34 18 156 A1.

Der Erfindung liegt die Aufgabe zugrunde, die vorstehend geschilderten Nachteile zumindest zu mildern. Insbesondere ist es von Vorteil, bereits bei der Montage einer Durchführung deren Unversehrtheit mit größerer Sicherheit als bisher gewährleisten zu können.

Darüber hinaus ist auch eine mechanisch robuste Montage einer Durchführung, insbesondere im Abgasstrang einer Brennkraftmaschine von Vorteil für deren Dauerbetriebsfestigkeit.

Die Erfinder haben festgestellt, dass in überraschender Weise sogar bei hochtemperaturfesten Durchführungen bei deren Montage, beispielsweise mittels Laser- oder Wolfram-Inertgas-Schweißen (WIG), bereits Vorschädigungen auftreten können, welche nicht immer sofort erkennbar sind, welche die Dauerbetriebsfestigkeit dieser hochtemperaturfesten Durchführungen jedoch deutlich mindern können.

Bereits mit den Merkmalen des unabhängigen Anspruchs 1 kann die vorstehende Aufgabe gelöst und können derartige Vorschädigungen deutlich vermindert werden.

Gemäß der Erfindung ist vorgesehen, dass eine Durchführung durch ein Gehäusebauteil, insbesondere für raue, mechanisch und thermisch belastete Umgebungen,
einen Innenleiter,
einen Außenleiter sowie
ein zwischen dem Außenleiter und dem Innenleiter angeordnetes elektrisch isolierendes Bauteil umfasst, wobei das zwischen dem Außenleiter und dem Innenleiter angeordnete elektrisch isolierende Bauteil vorzugsweise ein Glas, insbesondere ein kristallisierbares oder zumindest teilweise kristallisiertes Glas, oder eine Glaskeramik umfasst, und das elektrisch isolierende Bauteil den Innenleiter relativ zu dem Außenleiter elektrisch isoliert hält. In weiterer Ausgestaltung ist dem Außenleiter eine Hülse zugeordnet oder an diesem ausgebildet,
mittels welcher dieser an einem thermisch belasteten Gehäusebauteil insbesondere an einer Funktionsbaugruppe des Abgasstrangs eines Kraftfahrzeugs gehalten oder befestigbar ist.

Als thermisch belastete Umgebungen werden Umgebungen angesehen, in welchen wiederkehrende Temperaturunterschiede im Betriebszustand des thermisch belasteten Gehäusebauteils von mehr als 200 K auftreten können, wie dieses regelmäßig in Abgasanlagen von Brennkraftmaschinen der Fall ist.

Als raue, mechanisch und thermisch belastete Umgebungen, werden Umgebungen angesehen, in welchen zusätzlich zu den vorstehend beschrieben wiederkehrenden Temperaturunterschieden mechanische Belastungen, wie beispielsweise Vibrationen hinzukommen, welche auf die Durchführung einwirkende Beschleunigungskräfte von mindestens 10 g, somit dem Zehnfachen der im Gravitationsfeld der Erde wirkenden Beschleunigung, ausüben.

Im Sinne der vorliegenden Offenbarung wird eine Durchführung dann als "befestigbar" angesehen, wenn diese geeignet und bestimmt ist, an einer weiteren Baugruppe befestigt zu werden, beispielsweise mittels eines an einer von der Durchführung ausgebildeten oder einer der Durchführung zugeordneten Hülse zu dieser Befestigung bereitgestellten Montagebereichs.

Mittels eines elektrisch isolierenden Bauteils gehalten oder elektrisch isoliert gehalten bezeichnet im Rahmen der vorliegenden Offenbarung eine Art des Haltens, bei welcher ein Gleichstromwiderstand zwischen den sich in trockener Atmosphäre befindlichen Fügepartnern der vorliegen beschrieben Durchführung, somit zwischen dem Innenleiter und dem Außenleiter der Durchführung, auf welcher sich keine Ablagerungen befinden, welche diesen Widerstand beeinträchtigen können, mehr als 100 MOhm beträgt, wobei diese elektrischen Widerstandswerte bei Spannungen von weniger als 100 V gemessen sind.

Mit der Erfindung kann eine Montage oder Befestigung durch Schweißprozesse des isolierenden Bauteils, insbesondere der mittels dieses Bauteils häufig bereitgestellten Einglasung, beispielsweise durch inhomogene mechanische Spannungsverteilung während eines Schweißprozess, ohne Schädigung ermöglicht werden.

Hierbei kommt es vorteilhaft zu einer Entkopplung einer Einglasung des isolierenden Bauteils, welches regelmäßig ein hohes E-Modul aufweist und weniger elastisch als Metalle des Innen- oder Außenleiters ist, von Verformung des Außenleiters während der Anwendung des Schweißprozesses.

Zusätzlich kann eine Dämpfung der Auslenkung des als Pin ausgebildeten Innenleiters relativ zum Außenleiter gegenüber im Betriebszustand auftretenden Vibration bereitgestellt werden, welches nachfolgend noch detaillierter beschrieben wird.

Die Bereitstellung einer Hülse erlaubt den Einsatz angepasster Wandstärken, welche für den das isolierende Bauteil umgebenden Außenleiter dickwandiger und für an der Hülse angeordnete Montagebereiche, insbesondere Schweißbereiche dünner ausgeführt werden kann. Insgesamt kann der Innenleiter auf mechanische Belastungen elastischer reagieren.

Bei einer ersten bevorzugten Variante liegt eine einstückige Ausbildung des Außenleiters zusammen mit der Hülse vor. Im Rahmen der vorliegenden Offenbarung werden Ausführungsformen, bei welchen der Außenleiter zusammen mit der Hülse einstückig vorliegt, auch abkürzend lediglich als "einstückige Ausführungsformen" bezeichnet.

Weitere Ausführungsformen weisen eine zumindest zweistückige Ausbildung auf, bei welcher vorteilhaft unterschiedliche Werkstoffe, für den Außenleiter und die Hülse verwendbar sind. Hierbei können durch eine gezielt eingestellte Elastizität der Hülse, insbesondere durch eine entsprechende Auswahl des Materials sowie der Wandstärke und der axialen Erstreckung der Hülse auch thermische Ausdehnungsunterschiede zwischen der Durchführung sowie dem Bauteil, an welchem diese befestigt ist aufgenommen werden, ohne dass es zu schädigenden, thermisch bedingten Spannungsunterschieden kommen muss. Hierbei kann es vor allem vorteilhaft sein, die thermische Dehnung des Außenleiters an die der glaskeramischen Isolation anzupassen. Dies ist vorteilhaft in der Temperaturwechselbelastung, die in der Anwendung auftritt, da so Spannungen im glaskeramischen Isolationsmaterial minimiert werden.

Weiter ist es in einigen Fällen vorteilhaft das Material der Hülse unabhängig vom Außenleiter auf den Schweißpartner, an den die Durchführung befestigt wird, abzustimmen, um diesem Prozess zu optimieren.

Im Rahmen der vorliegenden Offenbarung werden Ausführungsformen, bei welchen der Außenleiter und die Hülse zweistückig vorliegen, auch abkürzend lediglich als "zweistückige Ausführungsformen" bezeichnet, selbst wenn die Hülse, beispielsweise mittels eines ersten Montagebereichs nach deren Montage mechanisch fest am Außenleiter gehalten ist.

Es kann eine hermetisch dichte Verbindung mittels Schweißen oder Löten realisiert werden, welche eine kostengünstige Serienfertigung insbesondere durch eine spanlose, somit nicht-spanabhebende Herstellung ermöglicht.

Bevorzugt ist der Innenleiter zylindersymmetrisch, insbesondere zylindrisch, ausgebildet ist und der Außenleiter umgibt den Innenleiter in einer zylindersymmetrischen, insbesondere ringförmigen Anordnung, da hierdurch eine kompakte und mechanisch stabile Ausgestaltung erhalten wird.

Die Hülse kann bei zweistückiger Ausgestaltung vorteilhaft den Außenleiter an dessen äußerer Mantelfläche umgeben und zumindest zwei voneinander räumlich beabstandete Montagebereiche aufweisen.

Hierbei kann ein erster Montagebereich eine mechanische Verbindung der Hülse zu dem Außenleiter bereitstellen und ein zweiter Montagebereich eine mechanische Verbindung der Hülse zu dem Gehäusebauteil der Funktionsbaugruppe des Abgasstrangs eines Kraftfahrzeugs, an welchem die Durchführung nach deren Montage gehalten ist.

Besonders vorteilhaft ist es dabei, dass für den ersten Montagebereich andere Befestigungsformen als für den zweiten Montagebereich wählbar sind, wie dies nachfolgend detaillierter unter Bezugnahme auf verschiedene Ausführungsformen mit deren Befestigungs- oder Montagemöglichkeiten beschrieben wird.

Erfindungsgemäß ist nach Montage der Hülse am Außenleiter der Durchführung ein Spalt zwischen der äußeren Mantelfläche des Außenleiters und einer inneren Oberfläche der Hülse ausbildet. Dann kann während der Montage, beispielsweise mittels Laser- oder WIG-Schweißen eine sehr effektive Wärmeableitung erfolgen und es besteht im montierten Zustand der Durchführung ein Freiraum, welcher elastische Auslenkungen der Durchführung ohne mechanische Kontakte und hierdurch bewirkte Schädigungen ermöglicht. Auch Kraftspitzen, welche beispielsweise in den als Pin ausgebildeten Innenleiter eingeleitet werden, können durch diese Ausgestaltung effektiv ohne mechanische Schädigungen aufgefangen werden.

Eine derartige Ausgestaltung der Hülse ermöglicht eine relativ freie Wahl bezüglich der axialen Breite der Befestigungsbereiche und es werden darüber hinaus auch mehrere Befestigungslinien über einander ermöglicht, beispielsweise um eine definierte mechanische Festigkeit und eine verminderte Neigung zum Schwingen, insbesondere resonanten Schwingen bereitzustellen.

Wenn die Hülse einen radial verengten Abschnitt im Bereich des ersten Montageabschnitts aufweist, kann dies mehrere Vorteile haben, beispielsweise dann, wenn durch diesen verengten Montageabschnitt eine Presspassung für die äußere Mantelfläche des Außenleiters bereitgestellt wird und diese den Außenleiter bereits sicher und dauerbetriebsfest relativ zur Hülse halten kann.

Ferner ermöglicht eine derart enge Anlage der Hülse an der äußeren Mantelfläche des Außenleiters auch das Widerstands- und Reibschweißen, um die Hülse derart dauerbetriebsfest am Außenleiter zu halten.

Zusätzlich wird auch das Laser- und WIG-Schweißen präziser ermöglicht, da entsprechende Schweißnähte dann sicherer ausgeführt werden können und kann auch dann eine hermetisch dichte Verbindung der Hülse mit dem Außenleiter mit höherer Sicherheit hergestellt werden.

Die durch den radial verengten Abschnitt der Hülse bereitgestellten Reibwirkung bezüglich der äußeren Mantelfläche des Außenleiters kann auch als Dämpfungsglied, beispielsweise gegenüber Torsions-, Kipp- und Longitudinalschwingungen des Außenleiters relativ zu der in einem Gerätebauteil gehaltenen Hülse wirken.

Somit kann der erste Montagebereich, welcher eine mechanische Verbindung des Außenleiters zu der Hülse bereitstellt, im montierten Zustand durch eine Presspassung oder auch durch lokale mechanische Verpressungen, insbesondere durch punktförmige oder bereichsweise Einsenkungen der Hülse in radial einwärtiger Richtung ausgebildet sein.

Vorteilhaft ist dabei der thermische Ausdehnungskoeffizient des Materials des Außenleiters gleich oder zumindest in dem jeweiligen Betriebstemperaturbereich nur leicht größer als der thermische Ausdehnungskoeffizient des Materials der Hülse, denn dann wird eine Erwärmung der Durchführung keine Kräfte erzeugen, welche versuchen, die Hülse vom Außenleiter zu trennen, sondere werden zusätzliche Kräfte in die Durchführung eingeleitet, welche die mechanische Verbindung zwischen dem Außenleiter und der Durchführung stabiler werden lassen. Vorteilhaft ist hierbei eine Differenz in der thermischen Dehnung somit der jeweiligen thermischen Ausdehnungskoeffizienten von kleiner als 3 ppm/K, besonders vorteilhaft kleiner als 1.5 ppm/K.

Vorteilhaft ist bei der vorstehend erwähnten zweistückigen Ausführung der erste Montagebereich an der inneren Oberfläche der Hülse und der zweite Montagebereich an einer äußeren Mantelfläche der Hülse ausgebildet und bei der einstückigen Ausführungsform der zumindest eine Montagebereich an der äußeren Mantelfläche der Hülse ausgebildet. Durch diese Anordnung des zweiten oder des zumindest einen Montagebereichs kann sichergestellt werden, dass bei der Montage entstehende, eventuell stark lokale Temperaturspitzen nur sehr vermindert zu einer Erwärmung des Außenleiters führen und selbst bei dessen Erwärmung nur auf lokal stark vergrößerte Bereiche einwirkten, sodass zwischen dem Außenleiter und dem isolierenden Bauteil nur deutlich geringere thermisch bedingte Spannungen entstehen.

Dies kann insbesondere dann der Fall sein, wenn der zweite Montagebereich, welcher eine mechanische Verbindung zu dem Gehäusebauteil der Funktionsbaugruppe des Abgasstrangs eines Kraftfahrzeugs bereitstellt, dann im montierten Zustand durch eine Lötverbindung oder eine Schweißverbindung, insbesondere Laser- oder WIG-Schweißverbindung oder durch Widerstandsschweißen mit dem Gehäusebauteil der Funktionsbaugruppe des Abgasstrangs eines Kraftfahrzeugs verbunden ist.

Vorteilhaft kann bei zweistückigen Ausführungsformen der erste Montagebereich, welcher eine mechanische Verbindung des Außenleiters zu der Hülse bereitstellt, im montierten Zustand durch eine Lötverbindung oder eine Schweißverbindung, insbesondere eine Widerstands-, Reibschweiß-, Laser- oder WIG-Schweißverbindung oder durch Reibschweißen ausgebildet sein, denn auch in diesem Fall kann durch die Hülse Wärme abgeführt und auf den Außenleiter einwirkende Wärme lokal stärker verteilt werden.

Wenn der zweite Montagebereich bei zweistückigen Ausführungsformen relativ zum ersten Montagebereich radial und/oder axial versetzt angeordnet ist oder der zumindest eine Montagebereich bei einstückigen Ausführungsformen radial und/oder axial versetzt zu dem Bereich angeordnet ist, in welchem der Außenleiter in die Hülse übergeht, können durch den radialen oder den axialen Versatz wärmeleitende Übergänge zwischen der Hülse und dem Außenleiter weiter definiert beeinflusst werden.

Generell kann eine am ersten Montagebereich angeordnete Befestigung radial umlaufend ausgebildet und eine dabei am ersten Montagebereich ausgebildete ringförmig geschlossene Befestigungslinie versetzt zum unteren und oberen radialen Ende der Hülse angeordnet sein und insbesondere durch deren Lage in axialer Richtung auf Torsions-, Kipp- und Longitudinalschwingungen dämpfend wirken, beispielsweise wenn diese Befestigungslinie einen möglichen Schwingungsbauch unterdrückt.

Hierzu kann auch der an einer äußeren Mantelfläche der Hülse ausgebildete zweite Montagebereich oder der zumindest eine Montagebereich umlaufend ausgebildet und eine am zweiten Montagebereich ausgebildete ringförmig geschlossene Befestigungslinie versetzt zum unteren und zum oberen radialen Ende der Hülse angeordnet sein.

Die vorliegend beschriebene Durchführung kann vorteilhaft an einer Funktionsbaugruppe eines Kraftfahrzeugs, wie beispielsweise an einem Abgaskatalysator, insbesondere einem elektrisch beheizbaren Abgaskatalysator (EHC) oder auch an einem Sensoren aufweisender Abgaskatalysator befestigt sein.

Alternativ oder zusätzlich kann die vorliegend beschriebene Durchführung auch an einem Turbolader, insbesondere einem mit einem elektrischen Antrieb versehenen Turbolader oder einem Sensoren aufweisenden Turbolader dauerbetriebsfest gehalten sein.

Ferner kann das thermisch belastete Gehäusebauteil, an welchem die Durchführung gehalten ist auch Teil einer chemischen Produktionsanlage sein.

Die Erfindung wird nachfolgend anhand bevorzugter Ausführungsformen und bezugnehmend auf die beiliegenden Zeichnungen detaillierter beschrieben.

Es zeigen:

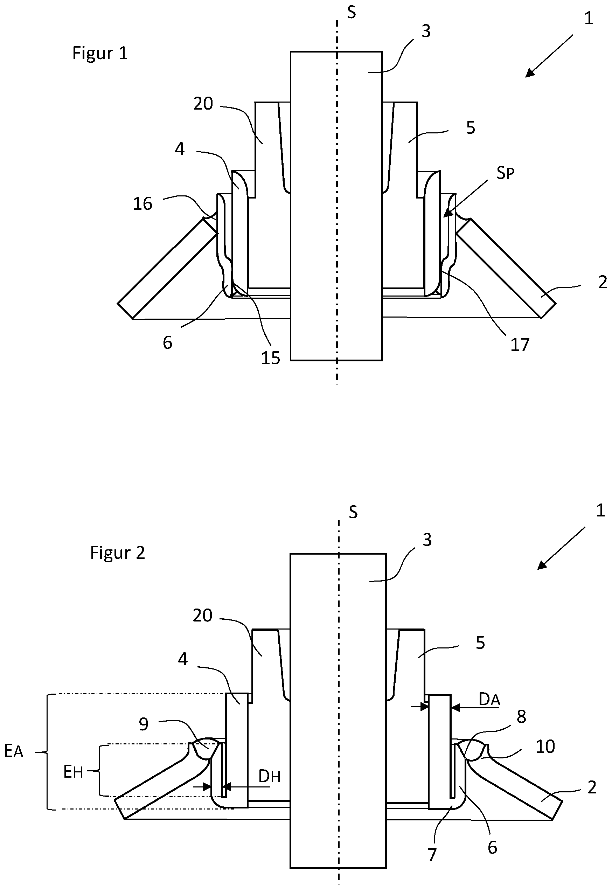

- Figur 1: eine Querschnittsdarstellung einer ersten bevorzugten Ausführungsform einer Durchführung, welche an einem thermisch belasteten Gehäusebauteil, insbesondere einer Funktionsbaugruppe des Abgasstrangs eines Kraftfahrzeugs gehalten ist, wobei die Querschnittsebene in horizontaler Richtung in etwa durch die Symmetrielinie der Durchführung verläuft,
- Figur 2: eine Querschnittsdarstellung einer zweiten bevorzugten Ausführungsform einer Durchführung, welche an einem thermisch belasteten Gehäusebauteil, insbesondere einer Funktionsbaugruppe des Abgasstrangs eines Kraftfahrzeugs gehalten ist, wobei die Querschnittsebene in horizontaler Richtung in etwa durch die Symmetrielinie der Durchführung verläuft,

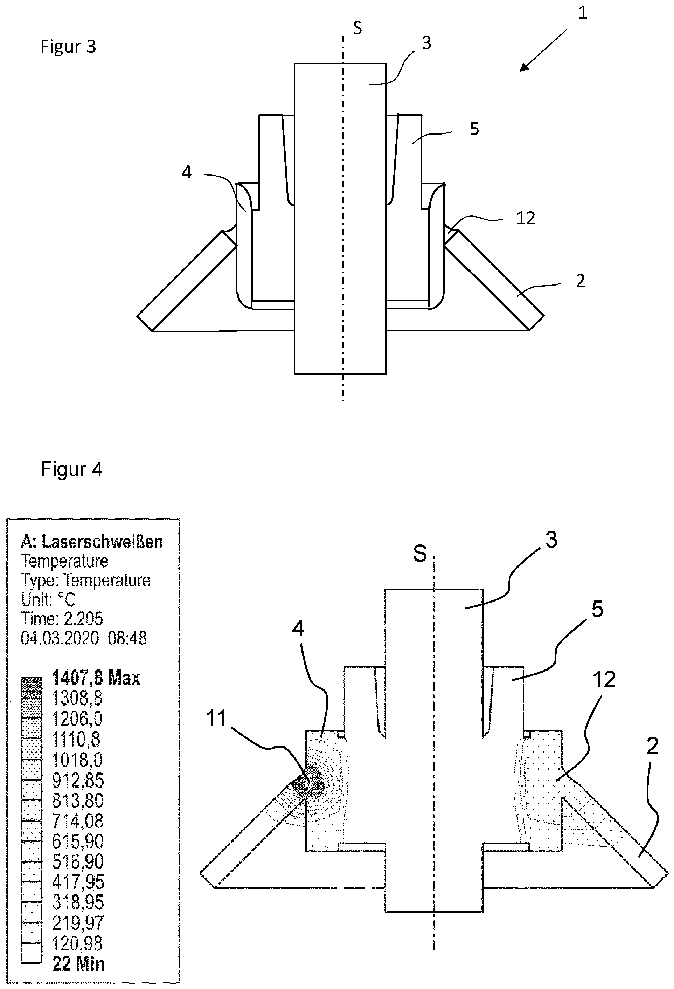

- Figur 3: eine Querschnittsdarstellung einer nicht erfindungsgemäßen Ausführungsform einer Durchführung, welche an einem thermisch belasteten Gehäusebauteil, insbesondere einer Funktionsbaugruppe des Abgasstrangs eines Kraftfahrzeugs gehalten ist, wobei die Querschnittsebene in horizontaler Richtung in etwa durch die Symmetrielinie der Durchführung verläuft,
- Figur 4: eine Querschnittsdarstellung der in Figur 3 gezeigten Durchführung, bei welcher Temperaturen dargestellt sind, wie diese beim Laserschweißen oder WIG-Schweißen zum Verbinden der Durchführung mit einer Funktionsbaugruppe des Abgasstrangs eines Kraftfahrzeugs auftreten können,

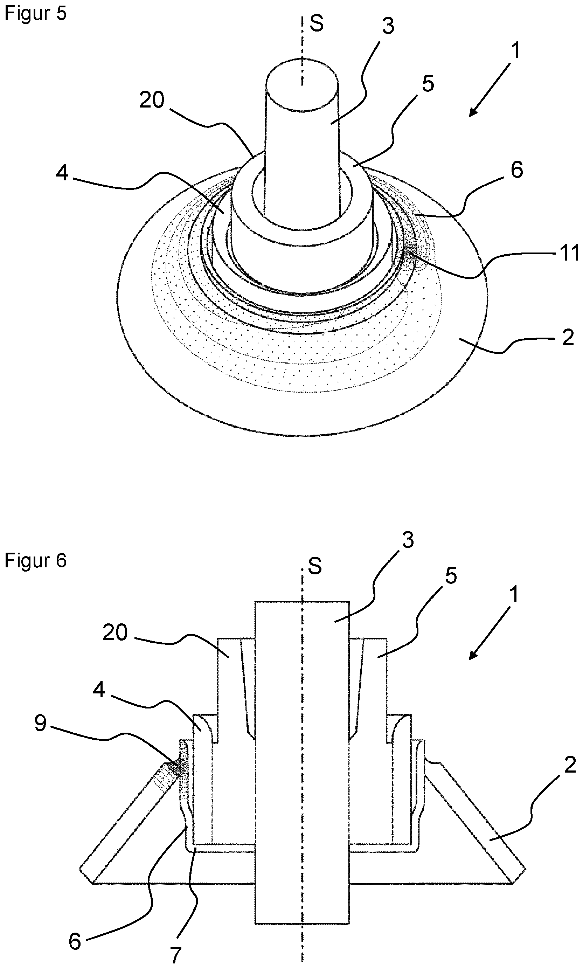

- Figur 5: eine Aufsicht auf eine 3d-Darstellung schräg von oben, bei welcher die beim Laserschweißen oder WIG-Schweißen auftretenden Temperaturen für die in Figur 1 dargestellte Ausführungsform bei deren Montage an einer Funktionsbaugruppe des Abgasstrangs eines Kraftfahrzeugs gezeigt sind,
- Figur 6: eine Querschnittsdarstellung der ersten bevorzugten Ausführungsform einer Durchführung, welche an einem thermisch belasteten Gehäusebauteil, insbesondere einer Funktionsbaugruppe des Abgasstrangs eines Kraftfahrzeugs gehalten ist, wobei die Querschnittsebene in horizontaler Richtung in etwa durch die Symmetrielinie der Durchführung verläuft und die beim Laserschweißen oder WIG-Schweißen auftretenden Temperaturen bei deren Montage an einer Funktionsbaugruppe des Abgasstrangs eines Kraftfahrzeugs gezeigt sind,

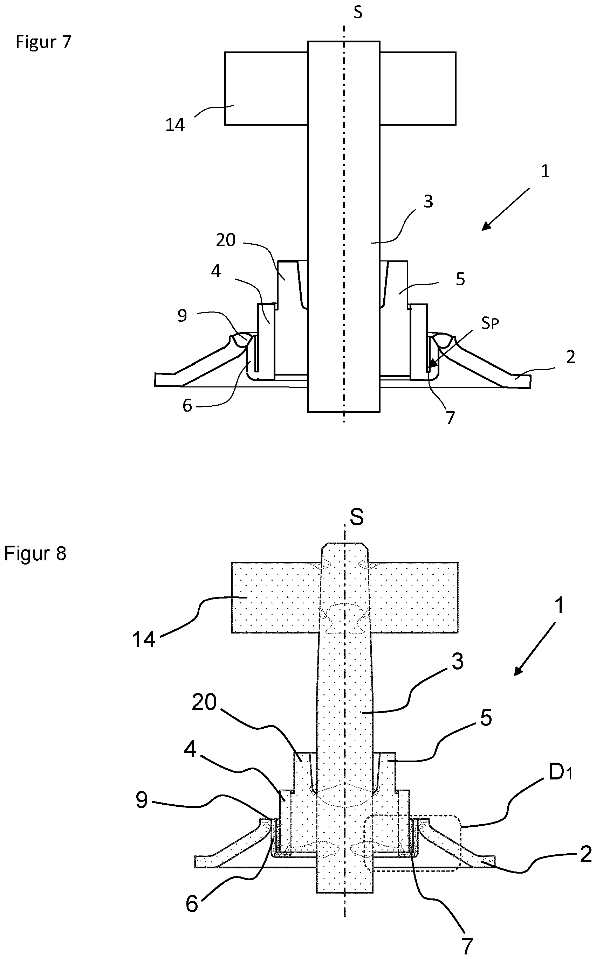

- Figur 7: eine Querschnittsdarstellung der in Figur 2 gezeigten zweiten bevorzugten Ausführungsform einer Durchführung, bei welcher ein Gewicht am Innenleiter angebracht ist mittels welchem Vibrationsspannungen in die Durchführung eingeleitet werden können, wobei die Querschnittsebene in horizontaler Richtung in etwa durch die Symmetrielinie der Durchführung verläuft,
- Figur 8: eine Querschnittsdarstellung einer simulierten Vibrationsbelastung der in Figur 2 gezeigten zweiten bevorzugten Ausführungsform, bei welcher wie in Figur 7 dargestellt ein Gewicht am Innenleiter angebracht ist mittels welchem Vibrationsspannungen in die Durchführung eingeleitet werden können zusammen mit den Ergebnissen der Vibrationsbelastung,

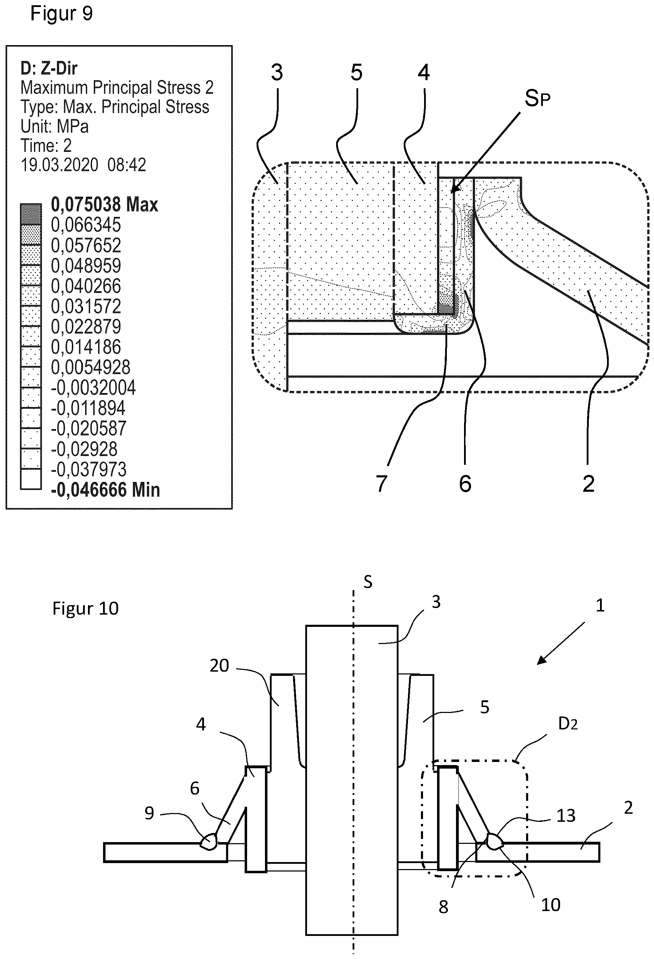

- Figur 9: eine vergrößerte Detailansicht aus Figur 8 im Bereich des Übergangs vom Außenleiter zur Hülse,
- Figur 10: eine Querschnittsdarstellung einer dritten bevorzugten Ausführungsform einer Durchführung, welche an einem thermisch belasteten Gehäusebauteil, insbesondere einer Funktionsbaugruppe des Abgasstrangs eines Kraftfahrzeugs gehalten ist, wobei die Querschnittsebene in horizontaler Richtung in etwa durch die Symmetrielinie der Durchführung verläuft,

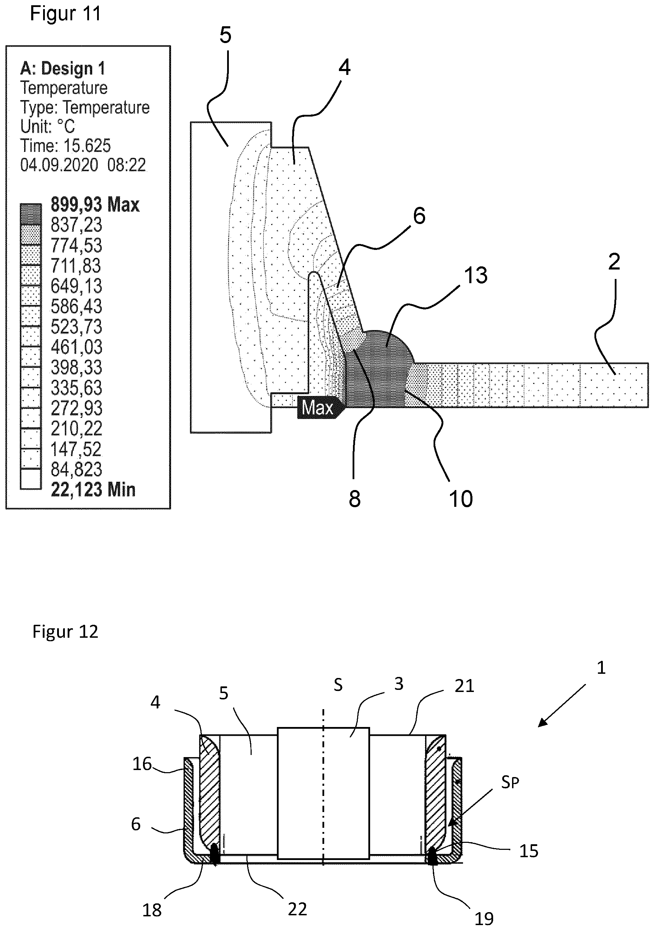

- Figur 11: eine Querschnittsdarstellung eines Details der in Figur 10 gezeigten Durchführung, bei welcher Temperaturen dargestellt sind, wie diese beim Laserschweißen oder WIG-Schweißen zum Verbinden der Durchführung mit einer Funktionsbaugruppe des Abgasstrangs eines Kraftfahrzeugs auftreten können,
- Figur 12: eine Querschnittsdarstellung des Außenleiters und der Hülse einer vierten bevorzugten Ausführungsform mit einem einkragenden Bodenbereich der Hülse, bei welcher die Hülse mittels Laserschweißen oder einer Lötverbindung am Außenleiter gehalten ist, wobei die Querschnittsebene in horizontaler Richtung in etwa durch die Symmetrielinie der Durchführung verläuft,

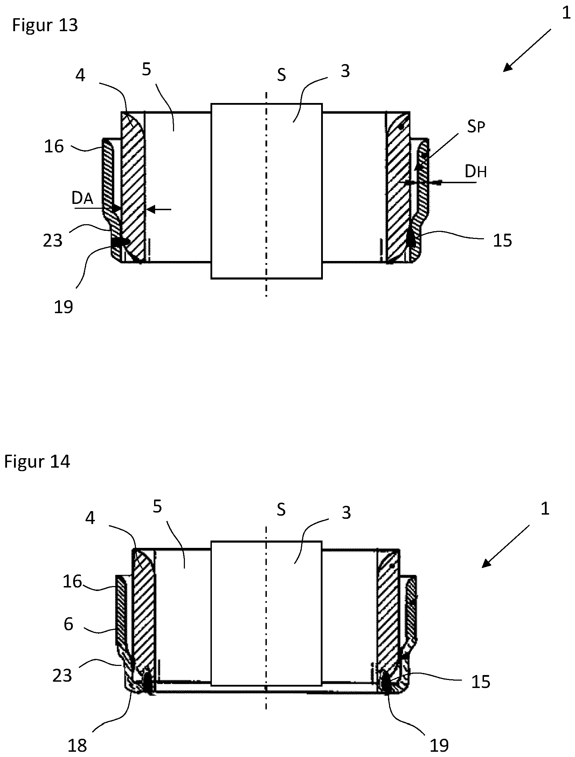

- Figur 13: eine Querschnittsdarstellung des Außenleiters und der Hülse einer fünften bevorzugten Ausführungsform mit einem radial verengten Abschnitt im Bereich des ersten Montageabschnitts der Hülse, bei welcher die Hülse mittels Laserschweißen oder einer Lötverbindung am Außenleiter gehalten ist,
- Figur 14: eine Querschnittsdarstellung des Außenleiters und der Hülse einer sechsten bevorzugten Ausführungsform mit einem einkragenden Bodenabschnitt und einem radial verengten Abschnitt im Bereich des ersten Montageabschnitts der Hülse, bei welcher die Hülse mittels Laserschweißen am Außenleiter gehalten ist,

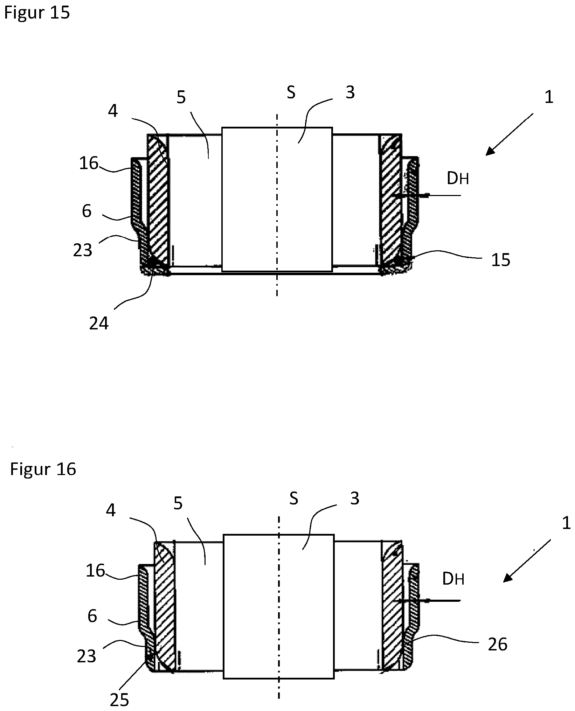

- Figur 15: eine Querschnittsdarstellung des Außenleiters und der Hülse einer siebten bevorzugten Ausführungsform mit einem einkragenden Bodenbereich und einem radial verengten Abschnitt im Bereich des ersten Montageabschnitts der Hülse, bei welcher die Hülse mittels einer Lötverbindung am Außenleiter gehalten ist,
- Figur 16: eine Querschnittsdarstellung des Außenleiters und der Hülse einer achten bevorzugten Ausführungsform mit einem radial verengten Abschnitt im Bereich des ersten Montageabschnitts der Hülse, bei welcher die Hülse mittels einer Presspassung und/oder oder durch mechanische Verpressungen, insbesondere durch punktförmige oder bereichsweise Einsenkungen der Hülse in radial einwärtiger Richtung am Außenleiter gehalten ist,

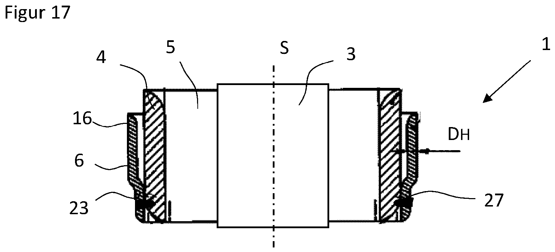

- Figur 17: eine Querschnittsdarstellung des Außenleiters und der Hülse einer neunten bevorzugten Ausführungsform mit einem radial verengten Abschnitt im Bereich des ersten Montageabschnitts der Hülse, bei welcher die Hülse mittels punktueller Schweißverbindungen am Außenleiter gehalten ist.

### Detaillierte Beschreibung

Bei der nachfolgenden detaillierten Beschreibung bezeichnen gleiche Bezugszeichen gleiche oder gleichwirkende Bestandteile in den verschiedenen jeweils offenbarten Ausführungsformen. Nur um eines besseren Verständnis willen sind nicht alle Darstellungen maßstabsgerecht gezeigt.

Nachfolgend wird auf Figur 1 Bezug genommen, welche eine Querschnittsdarstellung einer ersten bevorzugten Ausführungsform einer insgesamt mit dem Bezugszeichen 1 versehenen Durchführung durch ein Gehäusebauteil 2 zeigt, wobei diese Querschnittsdarstellung in horizontaler Richtung in etwa durch die Symmetrielinie S der Durchführung 1 verläuft.

Das Gehäusebauteil 2 kann Teil einer thermisch belasteten Baugruppe, insbesondere einer Funktionsbaugruppe des Abgasstrangs eines Kraftfahrzeugs, wie beispielsweise eines Abgaskatalysators, insbesondere eines elektrisch beheizbarer Abgaskatalysators (EHC) oder eines Sensoren aufweisenden Abgaskatalysators sein oder auch Teil eines Turboladers, insbesondere eines mit einem elektrischen Antrieb versehenen Turboladers oder eines Sensoren aufweisenden Turboladers sein.

Alternativ kann das thermisch belastete Gehäusebauteil 2 bei weiteren Ausführungsformen auch Teil einer chemischen Produktionsanlage sein um beispielsweise mittels der Durchführung 1 elektrische Signale zu oder von Sensoren oder Aktoren durch das Gehäusebauteil 2 zu führen.

Die Durchführung 1 umfasst generell einen Innenleiter 3, einen Außenleiter 4 sowie ein zwischen dem Außenleiter 4 und dem Innenleiter 3 angeordnetes elektrisch isolierendes Bauteil 5.

Das elektrisch isolierende Bauteil 5 kann ein Glas, insbesondere ein kristallisierbares oder zumindest teilweise kristallisiertes Glas, oder auch eine Glaskeramik umfassen und hält den Innenleiter 3 relativ zum Außenleiter 4 elektrisch von diesem isoliert mechanisch fest, insbesondere für die jeweilige Anwendung ausreichend auszugs- und vibrationsfest, welches durch dessen jeweiligen baulichen Abmessungen und Materialwahl anwendungsspezifisch sichergestellt ist.

Hierbei kann das elektrisch isolierende Bauteil 5 bei Fertigung der Durchführung 1 durch Erwärmung zumindest bereichsweise in dessen schmelzflüssigen Zustand gebracht werden, während es zwischen dem ebenfalls erwärmten Innenleiter 3 und dem erwärmten Außenleiter 4 bereits im Wesentlichen in dessen späterer Betriebsposition angeordnet ist und bei dieser erhöhten Temperatur sowohl die äußere Mantelfläche des Innenleiters 3 als auch die innere Oberfläche des Außenleiters 4 benetzen, welches auch als Anglasen bezeichnet wird. Eine nach der Benetzung erfolgende Abkühlung des Innenleiters 3, des elektrisch isolierenden Bauteils 5 und des Außenleiters 4 führt zu einer mechanisch stabilen Verbindung zwischen Innenleiter 3 und dem isolierenden Bauteil 5 sowie zwischen dem isolierenden Bauteil 5 und dem Außenleiter 4, welche auch als Einglasung bezeichnet wird. Weist der Außenleiter 4 einen höheren thermischen Ausdehnungskoeffizienten als das isolierende Bauteil 5 und der Pin auf, kommt es während des Abkühlens zu Druckspannungen, welche der Außenleiter 4 auf das isolierende Bauteil 5 ausübt, welche zu einer Festigkeitssteigerung der Durchführung 1 führt und insbesondere auch die Auszugsfestigkeit des Innenleiters 3 erhöht. In diesem Fall wird die dabei entstandene Einglasung auch als Druckeinglasung bezeichnet.

Generell ist der Innenleiter 3 zylindersymmetrisch, insbesondere zylindrisch, beispielsweise als zylindrischer Stift ausgebildet, wobei der Innenleiter 3 auch in weiteren Ausführungsformen säulenförmig mit einem von einer Zylindersymmetrie abweichenden Querschnitt ausgebildet sein kann, und umgibt der Außenleiter 4 den Innenleiter 3 zylindersymmetrisch, und ist insbesondere ring- oder rohrförmig ausgebildet.

Dem Außenleiter 4 ist eine Hülse 6 zugeordnet oder an diesem selbst ausgebildet, mittels welcher dieser und hierdurch die Durchführung 1 an dem Gehäusebauteil 2 gehalten oder an dem Gehäusebauteil 2 befestigbar ist.

In den in den Figuren 2, 5, 6, 7, 8 und 9 dargestellten Ausführungsformen ist die Hülse 6 im Wesentlichen zylindrisch ausgebildet und weist jeweils an deren unterem Ende einen radial nach innen verlaufenden Brückenabschnitt 7 auf, welcher diese einstückig mit dem Außenleiter 4 verbindet.

Bei den in den Figuren 10 und 11 dargestellten Ausführungsformen erstreckt sich die Hülse 6 kegelstumpfförmig vom Oberteil des Außenleiters 4 ausgehend, sich nach unten hin radial erweiternd, von diesem weg, ist jedoch ebenfalls mit diesem einstückig ausgebildet.

Bei diesen vorstehend beschriebenen einstückigen Ausführungsformen bestehen sowohl der Außenleiter 4 als auch die Hülse 6 aus dem selben Material, beispielsweise aus Metall, insbesondere Eisen, einer Eisenlegierung, einer Eisen-Chrom-legierung, einer Eisen-Chrom-Nickel-Legierung, einer Eisen-Nickel-Legierung, einer Eisen-Nickel-Kobald-Legierung, aus KOVAR, Titan, einer Titanlegierung, insbesondere aus einem Metall aus der Gruppe der Stähle, beispielsweise der Normalstähle, Edelstähle, nichtrostenden Stähle und der hochtemperaturstabilen ferritischen Stähle, welche auch bekannt sind unter dem Markennamen Thermax, beispielsweise Thermax 4016, Thermax4742, oder Thermax4762 oder Crofer22 APU oder CroFer22 H oder NiFe-basierten Materialien, beispielsweise NiFe45, NiFe47 oder bekannt unter dem Markennamen Inconel, beispielsweise Inconel 718 oder X-750, oder Stähle, beispielsweise bekannt unter den Bezeichnungen CF25, Alloy 600, Alloy 625, Alloy 690, SUS310S, SUS430, SUH446 oder SUS316, oder austenitischen Stählen wie 1.4828 oder 1.4841, Aluminium, einer Aluminiumlegierung, AlSIC, Magnesium oder auch einer Magnesiumlegierung.

Bei diesen einstückigen Ausführungsformen bei welchen die Hülse 6 einstückig mit dem Außenleiter 4 ausgebildet ist, weist die Hülse 6 zumindest einen ringförmigen Montagebereich 8 auf, an welchem diese in deren am Gehäusebauteil 2 montierten Zustand durch eine Laser- oder WIG-Schweißverbindung gehalten ist. Entlang des Montagebereichs 8 erstreckt sich eine ringförmige Laser- oder WIG-Schweißnaht 9 zu einem entsprechend an der Gehäusebaugruppe 2 ausgebildeten Montagebereich 10 und verbindet die Hülse 6 derart mit dem Gehäusebauteil 2.

Es wird dabei, wie auch bei den nachfolgend noch detaillierter dargestellten Ausführungsformen vorteilhaft eine Befestigung mittels Schweißen ohne Schädigung einer Einglasung des isolierenden Bauteils 5 durch inhomogene Spannungsverteilungen während des jeweiligen Schweißprozesses ermöglicht.

Es kommt während des Schweißens zu einer geringeren thermischen Belastung des isolierenden Bauteils 5 sowie zu einer Entkopplung der gesamten Einglasung des isolierenden Bauteils 5, welches in der Regel ein hohes E-Modul aufweist und weniger elastisch als Metalle ist, insbesondere von Verformungen des Außenleiters relativ zum isolierenden Bauteil 5.

Besonders gut ist dieser Sachverhalt im Vergleich zu der herkömmlichen, in den Figuren 3 und 4 dargestellten Ausführungsform zu erkennen, bei welcher es unmittelbar nach dem Schweißen direkt im Bereich des Schweißpunkts 11 der herkömmlichen Schweißnaht 12 an den zum Schweißunkt 11 benachbarten Bereichen der Innenwand des Außenleiters 4 zu sehr hohen Temperaturen Tmax von mehr als 950 °C, sogar bis zu 1019 °C beim WIG-Schweißen und von mehr als 600 °C beim Laserschweißen kommt, welche jeweils lokal begrenzt auf das isolierende Bauteil 5 einwirken.

Besonders schädlich sind diese lokal begrenzten, sehr hohen Temperaturen, weil diese im Bereich des Schweißpunkts 11, welcher, wie beispielsweise aus Figur 5 gut zu erkennen ist, während des Schweißens kreisförmig um den Außenleiter 4 und das Gehäusebauteil 2 an deren jeweiliger Berührungslinie geführt wird, sodass es sowohl zu starken thermischen als auch mechanischen Spannungen zwischen dem Außenleiter 4 und dem isolierenden Bauteil 5 sowohl während des durch das Schweißen bedingten Aufheizens als auch dem nachfolgenden Abkühlen kommt.

Hierdurch können bereits Schädigungen in der Durchführung 1 entstehen, welche nicht sofort nach dem Schweißvorgang erkennbar sein müssen, sondern zu einer stark verkürzten Betriebsfestigkeit dieser Durchführung führen können. Es können sich beispielsweise mikroskopische, während des Schweißvorgangs gebildete Risse nach und nach immer mehr ausbreiten, welches von späteren mechanischen und thermischen Belastungen der Durchführung noch gefördert werden kann, und in Folge, etwa durch einen nicht mehr ausreichend gehaltenen Innenleiter 3, zum Ausfall der Durchführung führen.

Wesentlich vorteilhaftere Bedingungen werden jedoch durch die vorliegend offenbarten, gegenüber dem Stand der Technik verbesserten Ausführungsformen ermöglicht, welche ohne Beschränkung der Allgemeinheit zunächst nur unter Bezugnahme auf die Figuren 10 und 11 nachfolgend erläutert werden, jedoch auch durch die weiteren vorliegend offenbarten Ausführungsformen verwirklicht werden.

Die während des Schweißvorgangs am Schweißpunkt 13 entstehende Wärme wird zunächst nicht in den Außenleiter 4, sondern in die jeweilige Hülse 6 eingeleitet, von welcher diese dann erst an den Außenleiter 4, jedoch nur in erheblich geringerem Maß als bei den herkömmlichen Durchführungen, weiter geleitet wird. Die maximale Temperatur Tmax des Außenleiters 4 betrug unmittelbar nach dem Laserschweißen, welches unter den gleichen Bedingungen wie das vorstehend beschriebene Laserschweißen einer herkömmlichen Durchführung vorgenommen wurde, an der mit dem isolierenden Bauteil 5 verbundenen Innenfläche oder inneren Oberfläche des Außenleiters 4 nur etwa 100 °C.

Beim WIG-Scheißen, welches ebenfalls unter den gleichen Bedingungen wie das vorstehend beschriebene WIG-Schweißen einer herkömmlichen Durchführung vorgenommen wurde, betrugen diese maximalen Temperaturen Tmax an der mit dem isolierenden Bauteil 5 verbundenen Innenfläche oder inneren Oberfläche des Außenleiters 4 nur etwa 139 °C.

Zusätzlich zu den stark verminderten thermischen Spannungen konnten auch mechanische, vom Außenleiter 4 auf das isolierende Bauteil 5 ausgeübte Spannungen stark vermindert werden, da diese im Wesentlichen bereits in der Hülse 6 relaxieren konnten.

Hierbei werden im Gegensatz zu mechanischen Spannungen, welche durch Kräfte, die der Außenleiter 4 auf das isolierende Bauteil 5 ausübt, als thermische Spannungen diejenigen Spannungen verstanden, welche durch den jeweiligen Temperaturgradienten im jeweiligen Bauteil selbst, also im Außenleiter 4 und dem isolierenden Bauteil 5 selbst erzeugt werden.

In sehr vorteilhafter Weise konnte auch die Dämpfung der Auslenkung, des vorzugsweise als zylindrischem Stift oder Pin ausgebildeten Innenleiters 3 relativ zum Außenleiter 4 gegenüber Vibrationen stark verbessert werden, wie dies nachfolgend unter Bezugnahme auf die Figuren 8 und 9 detaillierter beschrieben wird.

Die bei der in den Figuren 3 und 4 dargestellten herkömmlichen Durchführung in den Innenleiter 3 eingeleiteten Vibrationen wirken durch diesen direkt auf das isolierende Bauteil 5 und über dieses unmittelbar auf den Außenleiter 4 ein. Sind beispielsweise am Innenleiter 3 weitere Bauteile angeordnet, wie beispielsweise Verbinder, insbesondere Steck- oder Schraubverbinder, in der Regel jeweils mit deren zugehörigen Anschlussleitungen, so können diese beispielsweise beim Betrieb eines Kraftfahrzeugs, wenn die Durchführung an einem Gehäusebauteil einer Funktionsbaugruppe des Abgasstrangs dieses Kraftfahrzeugs, befestigt ist, erhebliche Kräfte auf den Innenleiter 3 ausüben. Durch die starre Verbindung mit dem Gehäusebauteil 2 müssen diese Kräfte jedoch vollständig vom Innenleiter 3 aufgenommen werden.

Bei den vorliegend offenbarten, verbesserten Ausführungsformen kann jedoch die Hülse 6 derartige, vibrationsbedingte Kräfte zu einem großen Teil elastisch aufnehmen und hierdurch die am Innenleiter 3 wirkenden Kräfte stark herabsetzen.

Bei den in den Figuren 7, 8 und 9 dargestellten Durchführungen wurden am oberen Ende von deren Innenleiter 3 jeweils ein mechanischer Aktor 14 angebracht, welcher Vibrationen in diesen einleitete, welche zu maximalen Beschleunigungen von etwa 13 g (somit dem dreizehnfachen der Beschleunigung des Gravitationsfelds der Erde auf Höhe des Meeresspiegels) führten, welche für übliche Anwendungsfälle derartiger Durchführungen deutlich oberhalb von deren Betriebsbelastungen liegen.

Aus der Darstellung von Figur 8, bei welcher die dabei entstehenden Spannungen farbig dargestellt sind, ist zu erkennen, dass innerhalb des Innenleiters 3, dem isolierenden Bauteil 5 sowie im Außenleiter 4 nur geringe Spannungen auftreten.

Figur 9, welche eine vergrößerte Detailansicht des Details D₁ aus Figur 8 im Bereich des Übergangs vom Außenleiter 4 zur Hülse 6 zeigt, offenbart, dass mechanische Spannungen im Wesentlichen nur in der Hülse 6 sowie im radial nach innen verlaufenden Brückenabschnitt 7, welcher die Hülse 6 einstückig mit dem Außenleiter 5 verbindet, und dem unteren Abschnitt des Außenleiters 4 auftreten und geringfügige, noch in das isolierende Bauteil 5 eingeleitete Spannungen als für isolierende Bauteil 5 als unkritisch einzustufen sind, da deren Maximum unterhalb von 0, 23 MPa liegt.

Im Wesentlichen gleiche Verbesserungen konnten auch mit den weiteren vorliegen offenbarten Ausführungsformen durch die jeweilige Hülse 6 erreicht werden, wobei dabei die Wahl der Dicke des zylindrischen Bereichs D_{A} des Außenleiters 4 relativ zur Dicke D_{H} des zylindrischen Bereichs der Hülse 6 von wesentlicher Bedeutung war, siehe beispielsweise Figur 2. Hierbei sollte die Dicke des zylindrischen Bereichs D_{A} des Außenleiters 4 bevorzugt etwa das Zwei- bis Vierfache der Dicke D_{H} des zylindrischen Bereichs der Hülse 6 betragen und die axiale Erstreckung E_{H} des zylindrischen Bereichs der Hülse 6 etwa das Drei- bis Zehnfache der Dicke D_{H} des zylindrischen Bereichs der Hülse 6. Bei den bevorzugten Ausführungsformen war die axiale Erstreckung E_{H} des zylindrischen Bereichs der Hülse 6 kleiner als die axiale Erstreckung E_{A} des zylindrischen Bereichs des Außenleiters 4.

Es ist generell vorteilhaft, wenn durch die Hülse 6 ein Spalt S_{P} zwischen der äußeren Mantelfläche des Außenleiters 4 und einer inneren Oberfläche der Hülse 4 ausgebildet ist, um auf diese Weise sicherzustellen, dass bei Vibrationen oder auf den Innenleiter 3 ausgeübten, eine Kippbewegung auslösenden Kräften, keine Beschädigungen am Außenleiter 4 sowie der Hülse 6 auftreten.

Bei weiteren, insbesondere in den Figuren 1 sowie 12 bis 17 dargestellten Ausführungsformen sind die Hülse 6 und der Außenleiter 4 jeweils zweistückig ausgebildet und umgibt die Hülse 6 den Außenleiter an dessen äußerer Mantelfläche und weist zumindest zwei voneinander räumlich beabstandete Montagebereiche 15, 16 auf.

Vorteilhaft kann bei diesen Ausführungsformen unterschiedliches Material für den Außenleiter und für die Hülse 6 verwendet werden. Unabhängig voneinander kann das Material der Hülse 6 oder des Außenleiters 4 aus Metall, insbesondere Eisen, einer Eisenlegierung, einer Eisen-Chrom-legierung, einer Eisen-Chrom-Nickel-Legierung, einer Eisen-Nickel-Legierung, einer Eisen-Nickel-Kobald-Legierung, aus KOVAR, Titan, einer Titanlegierung, insbesondere aus einem Metall aus der Gruppe der Stähle, beispielsweise der Normalstähle, Edelstähle, nichtrostenden Stähle und der hochtemperaturstabilen ferritischen Stähle, welche auch bekannt sind unter dem Markennamen Thermax, beispielsweise Thermax 4016, Thermax4742, oder Thermax4762 oder Crofer22 APU oder CroFer22 H oder NiFe-basierten Materialien, beispielsweise NiFe45, NiFe47 oder bekannt unter dem Markennamen Inconel, beispielsweise Inconel 718 oder X-750, oder Stähle, beispielsweise bekannt unter den Bezeichnungen CF25, Alloy 600, Alloy 625, Alloy 690, SUS310S, SUS430, SUH446 oder SUS316, oder austenitischen Stählen wie 1.4828 oder 1.4841, Aluminium, einer Aluminiumlegierung, AlSIC, Magnesium oder auch einer Magnesiumlegierung bestehen oder diese umfassen.

Der erste Montagebereich 15 stellt generell bei den zweistückigen Ausführungsformen eine mechanische Verbindung der Hülse 6 zu dem Außenleiter 4 und der zweite Montagebereich 16 eine mechanische Verbindung der Hülse 6 zu dem Gehäusebauteil 2 der Funktionsbaugruppe, beispielsweise eines Abgasstrangs eines Kraftfahrzeugs, bereit. Vorzugsweise ist der erste Montagebereich 15 an der inneren Oberfläche der Hülse 6 und der zweite Montagebereich 16 an einer äußeren Mantelfläche der Hülse 6ausgebildet.

Bevorzugt ist dabei der zweite Montagebereich 16 relativ zum ersten Montagebereich 15 radial und/oder axial versetzt angeordnet.

Bei der in Figur 1 dargestellten Ausführungsform ist der erste Montagebereich 15 beispielsweise durch Reibschweißen der Hülse 6, welche in diesem Fall vorzugsweise in deren unterem Bereich einen radial verengten Abschnitt aufweist, ausgebildet und umfasst der zweite Montagebereich 16 eine Schweißverbindung, insbesondere eine WIG- oder Laserschweißverbindung, wie dies vorstehend bereits für die einstückigen Ausführungsformen beschrieben wurde.

Generell kann jedoch der erste Montagebereich 15, welcher eine mechanische Verbindung des Außenleiters 4 zu der Hülse 6 bereitstellt, im montierten Zustand mit einer Lötverbindung oder einer Schweißverbindung, insbesondere einer Widerstands-, Reibschweiß-, Laser- oder WIG-Schweißverbindung oder durch Reibschweißen an der Hülse 6, insbesondere an einem Montagebereich 17 der Hülse 6 gehalten sein.

Bei weiteren Ausführungsformen kann im montierten Zustand der erste Montagebereich 15 auch durch eine Presspassung oder durch mechanische Verpressungen, insbesondere durch punktförmige oder bereichsweise Einsenkungen der Hülse 6 in radial einwärtiger Richtung an der Hülse 6, insbesondere an einem Montagebereich 17 der Hülse 6 gehalten sein.

Nachfolgend wird auf die in den Figuren 12 bis 17 dargestellten Ausführungsformen Bezug genommen, in welchen um der Einfachheit der Darstellung willen das Gehäusebauteil 2 nicht gezeigt wird, aber dennoch der Ort an welchem dieses am zweiten Montagebereich 16 anzubringen ist gezeigt wird.

In der Figur 12 dargestellten Ausführungsform des Außenleiters 4 und der Hülse 6 weist die Hülse 6 einen einkragenden Bodenbereich 18 auf und ist die Hülse 6 mittels einer durch Laserschweißen erzeugten ringförmigen Schweißnaht 19 mit deren einkragendem Bodenbereich 18 am Außenleiter 6 gehalten.

Bei dieser und den nachfolgend beschriebenen Ausführungsformen weist das isolierende Bauteil keine Kriechstreckenverlängerung 20 auf, welche sich im Wesentlichen ringförmig um den Innenleiter 3 beabstandet zu diesem nach oben erstreckt und eine Vergrößerung der Oberfläche zwischen dem Innenleiter 3 und dem Außenleiter 4 entlang der oberen Oberfläche des isolierenden Bauteils 5 bewirkt, sondern es verläuft jeweils die im Wesentlichen plane obere Oberfläche 21 des isolierenden Bauteils 5 im Wesentlichen parallel zu dessen ebenfalls planer unterer Oberfläche 22.

Die in den Figuren 13 bis 17 dargestellten Ausführungsformen weisen jeweils im unteren Bereich der Hülse 6 einen radial verengten Abschnitt 23 der Hülse 6 im Bereich des ersten Montageabschnitts 15 auf, welcher den Außenleiter 4 insbesondere während der Montage der Durchführung 1 bereits durch Reibkräfte sicher halten kann.

Figur 13 zeigt eine Querschnittsdarstellung des Außenleiters 4 und der Hülse 6 einer weiteren Ausführungsform, bei welcher die Hülse 6 keinen einkragenden Bodenbereich 18 aufweist und mittels Laserschweißen eine Schweißnaht 19 am Außenleiter 4 und der Hülse 6 angebracht ist, welche sich seitlich im unteren radial verengten Abschnitt 23 erstreckt.

In der in Figur 14 dargestellten Ausführungsform des Außenleiters 4 und der Hülse 6 mit einem radial einkragenden Bodenabschnitt 18 und einem radial verengten Abschnitt 23 ist im Bereich des ersten Montageabschnitts 15 der Hülse mittels Laserschweißen eine Schweißnaht 19 am Außenleiter 4 und der Hülse 6 angebracht ist, welche sich seitlich im radial einkragenden Bodenabschnitt 18 erstreckt.

Figur 15 zeigt eine Ausführungsform des Außenleiters 4 und der Hülse 6 mit einem einkragenden Bodenbereich 18 und einem radial verengten Abschnitt 23 im Bereich des ersten Montageabschnitts der Hülse, bei welcher die Hülse 6 mittels einer Lötverbindung 24 am Außenleiter 4 gehalten ist. Bei dieser Ausführungsform kann die Lötverbindung 24 vorteilhaft gleichzeitig und somit während des Einglasens des isolierenden Bauteils 5 hergestellt werden, da die für das Einglasen benötigten Temperaturen das verwendete Lot sicher verflüssigen kann. Hierzu bildet der radial verengte Abschnitt der Hülse 6 zusammen mit dem Außenleiter einen ringförmigen Hohlraum aus, in welchem das Lot vor dem Einglasen angeordnet werden kann und in welchem sich nach dem Einglasen die Lötverbindung 24 befindet.

Figur 16 ist eine Ausführungsform des Außenleiters 4 und der Hülse 6 mit einem radial verengten Abschnitt 23 im Bereich des ersten Montageabschnitts 15 zu entnehmen, bei welcher die Hülse 5 mittels einer Presspassung 25 und/oder oder durch mechanische Verpressungen, insbesondere durch punktförmige oder bereichsweise Einsenkungen 26 der Hülse 6 in radial einwärtiger Richtung am Außenleiter 4 gehalten ist.

Figur 17 offenbart eine Ausführungsform des Außenleiters 4 und der Hülse 6 mit einem radial verengten Abschnitt 23 im Bereich des ersten Montageabschnitts 15, bei welcher die Hülse mittels punktueller Schweißverbindungen 27 am Außenleiter gehalten ist.

### Bezugszeichenliste

- 1: Durchführung durch ein Gehäusebauteil 2
- 2: Gehäusebauteil
- 3: Innenleiter
- 4: Außenleiter
- 5: elektrisch isolierendes Bauteil
- 6: Hülse
- 7: radial nach innen verlaufender Brückenabschnitt, welcher die Hülse 6 einstückig mit dem Außenleiter 5 verbindet
- 8: Montagebereich derjenigen Ausführungsformen, bei welchen der Außenleiter und die Hülse einstückig ausgebildet sind
- 9: Schweißnaht
- 10: Montagebereich des Gehäusebauteils 2
- 11: Schweißpunkt
- 12: Schweißnaht einer herkömmlichen Durchführung
- 13: Schweißpunkt bei den vorliegen offenbarten Ausführungsformen
- 14: mechanischer Aktor
- 15: erster Montagebereich
- 16: zweiter Montagebereich
- 17: Montagebereich der Hülse 6
- 18: einkragender Bodenbereich der Hülse 6
- 19: Schweißnaht, insbesondere Laserschweißnaht
- 20: Kriechstreckenverlängerung
- 21: im Wesentlichen plane obere Oberfläche des isolierenden Bauteils 5
- 22: plane untere Oberfläche des isolierenden Bauteils 5
- 23: radial verengter Abschnitt der Hülse 6 im Bereich des ersten Montageabschnitts 15
- 24: Lötverbindung
- 25: Presspassung
- D₁: Detail aus Figur 8
- D₂: Detail aus Figur 10
- D_{A}: Dicke des zylindrischen Bereichs des Außenleiters 4
- D_{H}: Dicke des zylindrischen Bereichs der Hülse 6
- E_{A}: axiale Erstreckung des zylindrischen Bereichs des Außenleiters 4
- E_{H}: axiale Erstreckung des zylindrischen Bereichs der Hülse 6
- S: Symmetrielinie

## Patentansprüche

1. Durchführung (1) durch ein Gehäusebauteil (2), insbesondere für raue, mechanisch und thermisch belastete Umgebungen, umfassend
einen Innenleiter (3),
einen Außenleiter (4) sowie
ein zwischen dem Außenleiter (4) und dem Innenleiter (3) angeordnetes elektrisch isolierendes Bauteil (5),
welches vorzugsweise ein Glas, insbesondere ein kristallisierbares oder zumindest teilweise kristallisiertes Glas, oder eine Glaskeramik umfasst, und welches den Innenleiter (3) relativ zu dem Außenleiter elektrisch isoliert hält,
bei welcher dem Außenleiter (4) eine Hülse (6) zugeordnet oder an diesem ausgebildet ist,
mittels welcher dieser an einem thermisch belasteten Gehäusebauteil (2) insbesondere einer Funktionsbaugruppe des Abgasstrangs eines Kraftfahrzeugs gehalten oder befestigbar ist, **dadurch gekennzeichnet, dass** durch die Hülse (6) ein Spalt (S_{P}) zwischen der äußeren Mantelfläche des Außenleiters und einer inneren Oberfläche der Hülse (6) derart ausbildet ist, dass bei Vibrationen oder auf den Innenleiter (3) ausgeübten, eine Kippbewegung auslösenden Kräften, keine Beschädigungen am Außenleiter (4) sowie der Hülse (6) auftreten.

2. Durchführung (1) nach Anspruch 1, bei welcher der Innenleiter (3) zylindersymmetrisch, insbesondere zylindrisch, ausgebildet ist und der Außenleiter (4) den Innenleiter (3) zylindersymmetrisch, insbesondere ringförmig umgibt.

3. Durchführung (1) nach Anspruch 1 oder 2, bei welcher
die Hülse (6) den Außenleiter (4) an dessen äußerer Mantelfläche umgibt und zumindest zwei voneinander räumlich beabstandete Montagebereiche aufweist oder
bei welchem die Hülse (6) einstückig mit dem Außenleiter (4) ausgebildet ist und zumindest einen Montagebereich (15) ausbildet.

4. Durchführung (1) nach Anspruch 3, bei welcher
ein erster Montagebereich (15) eine mechanische Verbindung der Hülse (6) zu dem Außenleiter (4) bereitstellt und
ein zweiter Montagebereich (16) eine mechanische Verbindung der Hülse (6) zu dem Gehäusebauteil der Funktionsbaugruppe insbesondere des Abgasstrangs eines Kraftfahrzeugs bereitstellt.

5. Durchführung (1) nach einem der vorstehenden Ansprüche, bei welcher die Hülse (6) einen radial verengten Abschnitt im Bereich des ersten Montageabschnitts (15) aufweist.

6. Durchführung (1) nach einem der vorstehenden Ansprüche, bei welcher der erste Montagebereich (15) an der inneren Oberfläche der Hülse (6) und der zweite Montagebereich (16) an einer äußeren Mantelfläche der Hülse (6) ausgebildet ist.

7. Durchführung (1) nach einem der vorstehenden Ansprüche, bei welcher der zweite Montagebereich (16) relativ zum ersten Montagebereich (15) radial und/oder axial versetzt angeordnet ist.

8. Durchführung (1) nach einem der vorstehenden Ansprüche, bei welcher das Material der Hülse (6) aus Metall, insbesondere Eisen, einer Eisenlegierung, einer Eisen-Chrom-legierung, einer Eisen-Chrom-Nickel-Legierung, einer Eisen-Nickel-Legierung, einer Eisen-Nickel-Kobald-Legierung, aus KOVAR, Titan, einer Titanlegierung, insbesondere aus einem Metall aus der Gruppe der Stähle, beispielsweise der Normalstähle, Edelstähle, nichtrostenden Stähle und der hochtemperaturstabilen ferritischen Stähle, welche auch bekannt sind unter dem Markennamen Thermax, beispielsweise Thermax 4016, Thermax4742, oder Thermax4762 oder Crofer22 APU oder CroFer22 H oder NiFe-basierten Materialien, beispielsweise NiFe45, NiFe47 oder bekannt unter dem Markennamen Inconel, beispielsweise Inconel 718 oder X-750, oder Stähle, beispielsweise bekannt unter den Bezeichnungen CF25, Alloy 600, Alloy 625, Alloy 690, SUS310S, SUS430, SUH446 oder SUS316, oder austenitischen Stählen wie 1.4828 oder 1.4841, Aluminium, einer Aluminiumlegierung, AlSIC, Magnesium oder auch einer Magnesiumlegierung besteht oder diese umfasst.

9. Durchführung (1) nach einem der vorstehenden Ansprüche, bei welcher das Material des Außenleiters (4) aus Metall, insbesondere Eisen, einer Eisenlegierung, einer Eisen-Chrom-legierung, einer Eisen-Chrom-Nickel-Legierung, einer Eisen-Nickel-Legierung, einer Eisen-Nickel-Kobald-Legierung, aus KOVAR, Titan, einer Titanlegierung, insbesondere aus einem Metall aus der Gruppe der Stähle, beispielsweise der Normalstähle, Edelstähle, nichtrostenden Stähle und der hochtemperaturstabilen ferritischen Stähle, welche auch bekannt sind unter dem Markennamen Thermax, beispielsweise Thermax 4016, Thermax4742, oder Thermax4762 oder Crofer22 APU oder CroFer22 H oder NiFe-basierten Materialien, beispielsweise NiFe45, NiFe47 oder bekannt unter dem Markennamen Inconel, beispielsweise Inconel 718 oder X-750, oder Stähle, beispielsweise bekannt unter den Bezeichnungen CF25, Alloy 600, Alloy 625, Alloy 690, SUS310S, SUS430, SUH446 oder SUS316, oder austenitischen Stählen wie 1.4828 oder 1.4841, Aluminium, einer Aluminiumlegierung, AlSIC, Magnesium oder auch einer Magnesiumlegierung besteht oder diese umfasst.

10. Durchführung nach einem der Ansprüche von 4 bis 9, bei welcher der zweite Montagebereich (16) eine mechanische Verbindung zu dem Gehäusebauteil der Funktionsbaugruppe des Abgasstrangs eines Kraftfahrzeugs bereitstellt, im montierten Zustand durch eine Lötverbindung oder eine Schweißverbindung, insbesondere eine Laser- oder WIG-Schweißverbindung mit dem Gehäusebauteil der Funktionsbaugruppe des Abgasstrangs eines Kraftfahrzeugs verbunden ist.

11. Durchführung (1) nach einem der Ansprüche von 4 bis 10, bei welcher der erste Montagebereich, der eine mechanische Verbindung des Außenleiters (4) zu der Hülse (6) bereitstellt, im montierten Zustand durch eine Lötverbindung oder eine Schweißverbindung, insbesondere eine Widerstands-, Reibschweiß-, Laser- oder WIG-Schweißverbindung oder durch Reibschweißen ausgebildet ist an der Hülse (6), insbesondere an einem Montagebereich der Hülse (6) gehalten ist.

12. Durchführung (1) nach einem der Ansprüche von 4 bis 11, bei welcher der erste Montagebereich (15), der eine mechanische Verbindung des Außenleiters (4) zu der Hülse (6) bereitstellt,
im montierten Zustand durch eine Presspassung oder durch mechanische Verpressungen, insbesondere durch punktförmige oder bereichsweise Einsenkungen der Hülse (6) in radial einwärtiger Richtung an der Hülse (6), insbesondere an einem Montagebereich der Hülse (6) gehalten ist.

13. Durchführung (1) nach vorstehendem Anspruch, bei welcher der thermische Ausdehnungskoeffizient des Materials des Außenleiters (4) kleiner als der thermische Ausdehnungskoeffizient des Materials der Hülse (6) ist.

14. Durchführung (1) nach einem der Ansprüche von 4 bis 13, bei welcher die am ersten Montagebereich (15) angeordnete Befestigung radial umlaufend ausgebildet ist und eine am ersten Montagebereich (15) ausgebildete ringförmig geschlossene Befestigungslinie versetzt zum unteren und oberen radialen Ende der Hülse (6) angeordnet ist.

15. Durchführung (1) nach einem der Ansprüche von 4 bis 14, bei welcher der an einer äußeren Mantelfläche der Hülse (6) ausgebildet zweite Montagebereich (16) oder der zumindest eine Montagebereich umlaufend ausgebildet ist wobei eine am zweiten Montagebereich (16) ausgebildete ringförmig geschlossene Befestigungslinie versetzt zum unteren und zum oberen radialen Ende der Hülse (6) angeordnet ist.

16. Durchführung (1) nach einem der vorstehenden Ansprüche, bei welcher die Dicke des zylindrischen Bereichs D_{A} des Außenleiters (4) bevorzugt etwa das Zwei- bis Vierfache der Dicke (D_{H}) des zylindrischen Bereichs der Hülse (6) beträgt und insbesondere die axiale Erstreckung E_{H} des zylindrischen Bereichs der Hülse (6) etwa das Drei- bis Zehnfache der Dicke D_{H} des zylindrischen Bereichs der Hülse (6) aufweist.

17. Durchführung (1) nach einem der vorstehenden Ansprüche, bei welcher die axiale Erstreckung E_{H} des zylindrischen Bereichs der Hülse (6) kleiner als die axiale Erstreckung (E_{A}) des zylindrischen Bereichs des Außenleiters (4) ist.

18. Durchführung (1) nach einem der vorstehenden Ansprüche, bei welcher bei welcher die Funktionsbaugruppe eines Kraftfahrzeugs
ein Abgaskatalysator, insbesondere ein elektrisch beheizbarer Abgaskatalysator (EHC) oder ein Sensoren aufweisender Abgaskatalysator ist oder
ein Turbolader, insbesondere ein mit einem elektrischen Antrieb versehender Turbolader oder ein Sensoren aufweisender Turbolader ist
und/oder
bei welcher das thermisch belastete Gehäusebauteil Teil einer chemischen Produktionsanlage ist.

## Claims

1. Feedthrough (1) in a housing component (2), in particular for harsh environments subject to mechanical and thermal loading, comprising
an inner conductor (3),
an outer conductor (4) and
an electrically insulating component (5) between the outer conductor (4) and the inner conductor (3),
the electrically insulating component preferably comprising a glass, in particular a crystallizable or at least partially crystallized glass, or a glass ceramic and retaining the inner conductor (3) relative to the outer conductor in electrically insulated fashion,
wherein a sleeve (6) is assigned to or is formed on the outer conductor (4)
and retains or makes it possible to fasten this feedthrough on a housing component (2) that is subject to thermal loading, in particular a functional assembly of the exhaust gas system of a motor vehicle, **characterized in that** a gap (S_{P}) is formed through the sleeve (6) between the outer lateral surface of the outer conductor and an inner surface of the sleeve (6) in such a way that, in the event of vibrations, or forces that are exerted on the inner conductor (3) and trigger a tilting movement, no damage is done to the outer conductor (4) and the sleeve (6).

2. Feedthrough (1) according to Claim 1, wherein the inner conductor (3) has a cylindrically symmetrical, in particular cylindrical, form and the outer conductor (4) cylindrically symmetrically, in particular annularly, surrounds the inner conductor (3).

3. Feedthrough (1) according to Claim 1 or 2, wherein the sleeve (6) surrounds the outer lateral surface of the outer conductor (4) and has at least two spatially separate mounting regions or
wherein the sleeve (6) is formed in one piece with the outer conductor (4) and forms at least one mounting region (15).

4. Feedthrough (1) according to Claim 3, wherein
a first mounting region (15) provides a mechanical connection between the sleeve (6) and the outer conductor (4) and
a second mounting region (16) provides a mechanical connection between the sleeve (6) and the housing component of the functional assembly in particular of the exhaust gas system of a motor vehicle.

5. Feedthrough (1) according to one of the preceding claims, wherein the sleeve (6) has a radially narrowed portion in the region of the first mounting portion (15).

6. Feedthrough (1) according to one of the preceding claims, wherein the first mounting region (15) is formed on the inner surface of the sleeve (6) and the second mounting region (16) is formed on an outer lateral surface of the sleeve (6).

7. Feedthrough (1) according to one of the preceding claims, wherein the second mounting region (16) is radially and/or axially offset relative to the first mounting region (15).

8. Feedthrough (1) according to one of the preceding claims, wherein the material of the sleeve (6) consists of or comprises metal, in particular iron, an iron alloy, an iron-chromium alloy, an iron-chromium-nickel alloy, an iron-nickel alloy or an iron-nickel-cobalt alloy, Kovar, titanium, a titanium alloy, in particular a metal from the group of steels, for example standard steels, stainless steels, nonrusting steels and high-temperature-stable ferritic steels, which are also known under the trade name Thermax, for example Thermax 4016, Thermax 4742, or Thermax 4762 or Crofer22 APU or Crofer22 H or NiFe-based materials, for example NiFe45, NiFe47 or those known under the trade name Inconel, for example Inconel 718 or X-750, or steels known for example under the designations CF25, Alloy 600, Alloy 625, Alloy 690, SUS310S, SUS430, SUH446 or SUS316, or austenitic steels such as 1.4828 or 1.4841, aluminium, an aluminium alloy, AlSIC, magnesium or else a magnesium alloy.

9. Feedthrough (1) according to one of the preceding claims, wherein the material of the outer conductor (4) consists of or comprises metal, in particular iron, an iron alloy, an iron-chromium alloy, an iron-chromium-nickel alloy, an iron-nickel alloy or an iron-nickel-cobalt alloy, Kovar, titanium, a titanium alloy, in particular a metal from the group of steels, for example standard steels, stainless steels, nonrusting steels and high-temperature-stable ferritic steels, which are also known under the trade name Thermax, for example Thermax 4016, Thermax 4742, or Thermax 4762 or Crofer22 APU or Crofer22 H or NiFe-based materials, for example NiFe45, NiFe47 or those known under the trade name Inconel, for example Inconel 718 or X-750, or steels known for example under the designations CF25, Alloy 600, Alloy 625, Alloy 690, SUS310S, SUS430, SUH446 or SUS316, or austenitic steels such as 1.4828 or 1.4841, aluminium, an aluminium alloy, AlSIC, magnesium or else a magnesium alloy.

10. Feedthrough according to one of Claims 4 to 9, wherein the second mounting region (16) provides a mechanical connection to the housing component of the functional assembly of the exhaust gas system of a motor vehicle and in the mounted state is connected to the housing component of the functional assembly of the exhaust gas system of a motor vehicle by a soldered connection or a welded connection, in particular a laser-welded or TIG-welded connection.

11. Feedthrough (1) according to one of Claims 4 to 10, wherein the first mounting region, which provides a mechanical connection between the outer conductor (4) and the sleeve (6), in the mounted state is formed by a soldered connection or a welded connection, in particular a resistance-welded, friction-welded, laser-welded or TIG-welded connection or by friction welding, on the sleeve (6), in particular is retained on a mounting region of the sleeve (6).

12. Feedthrough (1) according to one of Claims 4 to 11, wherein the first mounting region (15), which provides a mechanical connection between the outer conductor (4) and the sleeve (6),
in the mounted state is retained on the sleeve (6), in particular on a mounting region of the sleeve (6), by a press fit or by mechanical pressing means, in particular by recesses at certain points or certain regions of the sleeve (6) in the radially inward direction.

13. Feedthrough (1) according to the preceding claim, wherein the coefficient of thermal expansion of the material of the outer conductor (4) is less than the coefficient of thermal expansion of the material of the sleeve (6).

14. Feedthrough (1) according to one of Claims 4 to 13, wherein the fastening means on the first mounting region (15) has a radially encircling form and an annularly closed fastening line formed on the first mounting region (15) is offset in relation to the lower and upper radial ends of the sleeve (6).

15. Feedthrough (1) according to one of Claims 4 to 14, wherein the second mounting region (16) formed on an outer lateral surface of the sleeve (6), or the at least one mounting region, has an encircling form, wherein an annularly closed fastening line formed on the second mounting region (16) is offset in relation to the lower and upper radial ends of the sleeve (6).

16. Feedthrough (1) according to one of the preceding claims, wherein the thickness of the cylindrical region D_{A} of the outer conductor (4) is preferably approximately twice to four times the thickness (D_{H}) of the cylindrical region of the sleeve (6) and in particular the axial extent E_{H} of the cylindrical region of the sleeve (6) has approximately three to ten times the thickness D_{H} of the cylindrical region of the sleeve (6).

17. Feedthrough (1) according to one of the preceding claims, wherein the axial extent E_{H} of the cylindrical region of the sleeve (6) is less than the axial extent (E_{A}) of the cylindrical region of the outer conductor (4) .

18. Feedthrough (1) according to one of the preceding claims, wherein the functional assembly of a motor vehicle
is an exhaust-gas catalytic converter, in particular an electrically heated exhaust-gas catalytic converter (EHC) or an exhaust-gas catalytic converter comprising sensors, or
is a turbocharger, in particular a turbocharger provided with an electric drive or a turbocharger comprising sensors
and/or
wherein the housing component that is subject to thermal loading is part of a chemical production plant.

## Revendications

1. Dispositif de passage (1) à travers un composant de boîtier (2), en particulier pour des environnements difficiles sous contrainte mécanique et thermique, comprenant
un conducteur interne (3),
un conducteur externe (4), et
un composant électriquement isolant (5) disposé entre le conducteur externe (4) et le conducteur interne (3),
qui comprend de préférence du verre, en particulier du verre cristallisable ou au moins partiellement cristallisé, ou une vitrocéramique, et qui maintient le conducteur interne (3) électriquement isolé par rapport au conducteur externe,
dans lequel une douille (6) est associée au conducteur externe (4) ou est réalisée au niveau de celui-ci,
au moyen de laquelle celui-ci peut être maintenu ou fixé au niveau d'un composant de boîtier (2) sous contrainte thermique, en particulier d'un sous-ensemble fonctionnel de la colonne d'échappement d'un véhicule automobile, **caractérisé en ce que** la douille (6) réalise une fente (S_{P}) entre la surface latérale extérieure du conducteur externe et une surface intérieure de la douille (6) de telle sorte qu'en cas de vibrations ou de forces déclenchant un mouvement de basculement, exercées sur le conducteur interne (3), aucun dégât n'apparaît sur le conducteur externe (4) et la douille (6).

2. Dispositif de passage (1) selon la revendication 1, dans lequel le conducteur interne (3) est réalisé à symétrie de cylindre, en particulier de manière cylindrique, et le conducteur externe (4) entoure le conducteur interne (3) à symétrie de cylindre, en particulier de manière annulaire.

3. Dispositif de passage (1) selon la revendication 1 ou 2, dans lequel
la douille (6) entoure le conducteur externe (4) au niveau de la surface latérale extérieure de celui-ci et présente au moins deux zones de montage espacées physiquement l'une de l'autre, ou
dans lequel la douille (6) est réalisée d'un seul tenant avec le conducteur externe (4) et réalise au moins une zone de montage (15).

4. Dispositif de passage (1) selon la revendication 3, dans lequel
une première zone de montage (15) fournit un raccordement mécanique de la douille (6) au conducteur externe (4), et
une deuxième zone de montage (16) fournit un raccordement mécanique de la douille (6) au composant de boîtier du sous-ensemble fonctionnel, en particulier de la colonne d'échappement d'un véhicule automobile.

5. Dispositif de passage (1) selon l'une quelconque des revendications précédentes, dans lequel la douille (6) présente une section radialement rétrécie dans la zone de la première section de montage (15).

6. Dispositif de passage (1) selon l'une quelconque des revendications précédentes, dans lequel la première zone de montage (15) est réalisée au niveau de la surface intérieure de la douille (6), et la deuxième zone de montage (16) est réalisée au niveau d'une surface latérale extérieure de la douille (6).

7. Dispositif de passage (1) selon l'une quelconque des revendications précédentes, dans lequel la deuxième zone de montage (16) est disposée de manière radialement et/ou axialement décalée par rapport à la première zone de montage (15).

8. Dispositif de passage (1) selon l'une quelconque des revendications précédentes, dans lequel le matériau de la douille (6) est composé de ou comprend du métal, en particulier du fer, un alliage de fer, un alliage de fer et chrome, un alliage de fer, chrome et nickel, un alliage de fer et nickel, un alliage de fer, nickel et cobalt, du KOVAR, du titane, un alliage de titane, en particulier un métal du groupe des aciers, en particulier des aciers ordinaires, des aciers spéciaux, des aciers inoxydables et des aciers ferritiques stables à haute température, qui sont également connus sous le nom commercial Thermax, par exemple Thermax 4016, Thermax 4742 ou Thermax 4762 ou Crofer 22 APU ou CroFer 22 H, ou des matériaux à base de NiFe, par exemple NiFe45, NiFe47, ou connus sous le nom commercial Inconel, par exemple Inconel 718 ou X-750, ou des aciers, par exemple connus sous les appellations CF25, Alloy 600, Alloy 625, Alloy 690, SUS310S, SUS430, SUH446 ou SUS316, ou des aciers austénitiques, tels que 1.4828 ou 1.4841, de l'aluminium, un alliage d'aluminium, AISIC, du magnésium ou bien un alliage de magnésium.

9. Dispositif de passage (1) selon l'une quelconque des revendications précédentes, dans lequel le matériau du conducteur externe (4) est composé de ou comprend du métal, en particulier du fer, un alliage de fer, un alliage de fer et chrome, un alliage de fer, chrome et nickel, un alliage de fer et nickel, un alliage de fer, nickel et cobalt, du KOVAR, du titane, un alliage de titane, en particulier un métal du groupe des aciers, en particulier des aciers ordinaires, des aciers spéciaux, des aciers inoxydables et des aciers ferritiques stables à haute température, qui sont également connus sous le nom commercial Thermax, par exemple Thermax 4016, Thermax 4742 ou Thermax 4762 ou Crofer 22 APU ou CroFer 22 H, ou des matériaux à base de NiFe, par exemple NiFe45, NiFe47, ou connus sous le nom commercial Inconel, par exemple Inconel 718 ou X-750, ou des aciers, par exemple connus sous les appellations CF25, Alloy 600, Alloy 625, Alloy 690, SUS310S, SUS430, SUH446 ou SUS316, ou des aciers austénitiques, tels que 1.4828 ou 1.4841, de l'aluminium, un alliage d'aluminium, AISIC, du magnésium ou bien un alliage de magnésium.

10. Dispositif de passage selon l'une quelconque des revendications 4 à 9, dans lequel la deuxième zone de montage (16) fournit un raccordement mécanique au composant de boîtier du sous-ensemble fonctionnel de la colonne d'échappement d'un véhicule automobile, à l'état monté par un raccordement brasé ou un raccordement soudé, en particulier un raccordement par soudage laser ou TIG au composant de boîtier du sous-ensemble fonctionnel de la colonne d'échappement d'un véhicule automobile.

11. Dispositif de passage (1) selon l'une quelconque des revendications 4 à 10, dans lequel la première zone de montage, qui fournit un raccordement mécanique du conducteur externe (4) à la douille (6), à l'état monté par un raccordement brasé ou un raccordement soudé, en particulier un raccordement soudé par résistance, par friction, au laser ou TIG ou par soudage par friction, est maintenue au niveau de la douille (6), en particulier au niveau d'une zone de montage de la douille (6).

12. Dispositif de passage (1) selon l'une quelconque des revendications 4 à 11, dans lequel la première zone de montage (15), qui fournit un raccordement mécanique du conducteur externe (4) à la douille (6),
est maintenue à l'état monté par un ajustement serré ou par des pressages mécaniques, en particulier par des enfoncements ponctuels ou localisés de la douille (6) dans la direction radialement vers l'intérieur, au niveau de la douille (6), en particulier au niveau d'une zone de montage de la douille (6).

13. Dispositif de passage (1) selon la revendication précédente, dans lequel le coefficient de dilatation thermique du matériau du conducteur externe (4) est inférieur au coefficient de dilatation thermique du matériau de la douille (6).

14. Dispositif de passage (1) selon l'une quelconque des revendications 4 à 13, dans lequel la fixation disposée au niveau de la première zone de montage (15) est réalisée de manière radialement périphérique, et une ligne de fixation fermée en forme d'anneau et réalisée au niveau de la première zone de montage (15) est disposée de manière décalée par rapport à l'extrémité radiale inférieure et supérieure de la douille (6).

15. Dispositif de passage (1) selon l'une quelconque des revendications 4 à 14, dans lequel la deuxième zone de montage (16) réalisée au niveau d'une surface latérale extérieure de la douille (6) ou ladite au moins une zone de montage est réalisée de manière périphérique, dans lequel une ligne de fixation fermée en forme d'anneau et réalisée au niveau de la deuxième zone de montage (16) est disposée de manière décalée par rapport à l'extrémité radiale inférieure et supérieure de la douille (6).

16. Dispositif de passage (1) selon l'une quelconque des revendications précédentes, dans lequel l'épaisseur de la zone cylindrique D_{A} du conducteur externe (4) mesure de préférence environ deux à quatre fois l'épaisseur (D_{H}) de la zone cylindrique de la douille (6), et en particulier l'extension axiale E_{H} de la zone cylindrique de la douille (6) présente environ trois à dix fois l'épaisseur D_{H} de la zone cylindrique de la douille (6).

17. Dispositif de passage (1) selon l'une quelconque des revendications précédentes, dans lequel l'extension axiale E_{H} de la zone cylindrique de la douille (6) est inférieure à l'extension axiale (E_{A}) de la zone cylindrique du conducteur externe (4).

18. Dispositif de passage (1) selon l'une quelconque des revendications précédentes, dans lequel le sous-ensemble fonctionnel d'un véhicule automobile
est un catalyseur, en particulier un catalyseur à chauffage électrique (EHC) ou un catalyseur présentant des capteurs, ou
un turbocompresseur, en particulier un turbocompresseur muni d'un entraînement électrique, ou un turbocompresseur présentant des capteurs,
et/ou
dans lequel le composant de boîtier sous contrainte thermique fait partie d'une installation de production chimique.
